# EUROPEAN PATENT APPLICATION

(11) **EP 3 782 805 A1**
(43) Date of publication of application: **24.02.2021**
(21) Application number: 19315096.8
(22) Date of filing: 19.08.2019
(51) Int. Cl.: B32B 3/08, B32B 3/26, B32B 7/06, B32B 7/12, B32B 15/082, B32B 15/092, B32B 15/18, B32B 15/20, B32B 27/08, B32B 27/10, B32B 27/30, B32B 27/36, B32B 27/38, B32B 37/12

(54) **MULTILAYER STRUCTURE MANUFACTURING METHOD FOR BONDING LAYERS WITH ADHESIVE FILM(S)**

(71) Applicant: Thales Dis France SA, 92190 Meudon (FR)
(72) Inventor: Oddou, Laurent, 13881 Gémenos Cedex (FR); Tibiletti, Lucie, 13881 Gémenos Cedex (FR); Choo, Yeow Chun Ricky, 13881 Gémenos Cedex (FR); Bajolle, Antoine, 13881 Gémenos Cedex (FR)
(74) Representative: Milharo, Emilien

(57) **Abstract**

The invention relates to a multilayer structure manufacturing method comprising the following steps of bonding layers (4, 8, 5, 6) of its structure (1, 7) with thermosetting adhesive film(s) (2, 3), said thermosetting adhesive film(s) having recommended operating conditions of temperature and duration in its technical specification (TDS) to polymerize during thermal lamination (500, 600) ;
The method is characterized in that said thermosetting adhesive is laminated with said layers in order to present a partial polymerization rate less than polymerization rate resulting from said recommended operating conditions.

## Description

### Invention Domain.

The invention concerns a multilayer structure manufacturing method for bonding layers with adhesive film(s).

It concerns preferably the structures of metal smart cards with metal edges, a manufacturing method for such cards as well as the associated inlays.

Invention may apply to another card structure such as PVC cards, PET cards, PC cards, passports, inlays, intermediate inlays structure for card of passports, data sheets.

It may apply to cards that contains elements which are not bondable due to the lack of plastic elements, such as biometric products or cards.

### Prior art.

A method of manufacturing metal cards with metal edge comprises a step of using a skeleton under the shape of a polymeric sheet with holes to receive metal plates into each hole. The skeleton is thereafter covered with a resin to fill the space around the plates and to make adhesion with a sheet covering the whole.

Prior art in flexible printed circuit (FPC) industry uses thermosetting adhesive in "standard" recommended conditions, i.e. 160-180°C during one hour at atmospheric conditions, to fix flexible printed circuit on a rigid substrate.

### Technical problem

Card made of multilayers including usual cards plastics are simple to produce as it does not consist of very different thermal coefficient and stiffness. when a multi-layer of soft material is hot laminated with a rigid material such as metal plate, the impression mark from the metal plate becomes extremely visible.

Through rigorous tweaking of the lamination parameters and artwork fine tuning, it is possible to avoid such impression marks but the process window is extremely narrow.

Current manufacture of inlays with, in smart card or passport industry, includes contactless chip connected to an antenna and are made of multilayers comprising metal plates and polymeric sheets bonded together through thermosetting adhesives there between. This inlay manufacturing generally requires a hot lamination step involving a large amount of heat activation with one of different similar types of thermosetting adhesive known on the market.

Card peeling after aging is a further issue since generally such thermosetting adhesives lose their adhesive strength after temperature and humidity exposure testing.

Inlays manufacturing speed and cost is a further issue with known solution.

The next best way to remove the impression mark is do this is via cold lamination which is documented as an alternative technique below to producing such cards. Such production methods deal with epoxy resin dispensing and output is generally slow due to the curing time for a single line comparison model. With this unique structure proposed, we can easily produce such Edge metal cards with low to no impression marks due to low temperature processing without the compromise to the quality of the card.

Alternative method in cold lamination uses epoxy resin or UV cured epoxy to bond the different layers. However, manufacturing control is stringent to ensure flatness and requires highly critical and extremely messy process. Curing epoxy resin usually gives thickness imperfection or implies frosting due to lamination reflow.

The inventors found that current metal card design lacks bond strength on the metallic region. They found namely that the overlay adhesive does not stick to the metal.

Global card cohesion is ensured by PVC/ overlay coating interface on the edges of the cards, but peeling strength is anyway limited by the intrinsic performance of the overlay coating, around 8N/cm.

Furthermore, inventors found also, that cold lamination would limit the amount of features we can have on the card itself, such as a foil card body construction.

### Invention abstract.

Invention aims to solve above drawbacks or objectives.

Inventors solve the problem thanks to a hot lamination approach with thermosetting adhesive layer used in unusual operating conditions enabling to achieve a chemical and/or physical state of the adhesive presenting sought properties of the multilayered products of the invention.

Although thermosetting adhesives may be suitable to solve the invention or to present a technical progress or advantages, the multilayer structure may use preferably a specific thermosetting acryl-epoxy adhesive film (or layer) used in a non-standard process window to bond to a metallic substrate or other inserted components (at operating conditions being at approximatively 70% of its recommended activation temperature and approximatively 30% of recommended duration. This way to operate enables high metal bond strength to rest in the card without any additional varnish or adhesive solution.

This preferred adhesive, which is translucent/opaque allows to build a specific card construction that would fulfil the elements further elaborated below.
Advantageously, this adhesive can be stored and manipulated at room temperature. It should also be noted that the recommended activation temperatures and durations were referenced in the corresponding technical data sheet (TDS) to bond with aluminium and stainless steel.

This preferred adhesive allows to propose card features that are linked to prestigious feeling/look without any compromise and in fact performs better than our existing product in terms of quality due to the bond strength with the metal.

This obtained inlay structure could also possibly be extended to hybrid metal structures where one face is metal while the other face is plastic.

Another utility that this unique structure provides is the option to laminate at low temperatures as compared to other types of similar adhesive based constructions without the major problem of flowing greatly during the lamination step which leads to distortion of customer artwork.

Furthermore, the adhesive may preferably have a pressure activated tack at room temperature. This allows the operation of assembly of antenna/transponder layer and metal plate to be done easily removing an existing messy step of epoxy dispensing to hold the component on a thin plastic layer.

Removing epoxy spreading step to ensure even thickness or filling of voids during the cutting. This also eliminates problems of epoxy reflow during final card lamination, leading to frosting/lamination defects or thickness variances.

Efficient inlay manufacturing is also achievable due to the pick and place approach this card structure provides. The method is easier to implement; The pick and place method may also be better compatible with manufacturing tools and equipment in card industry domain.

A protective liner (paper, or polymeric film) on the reverse side of the adhesive prevents the blocking of the inlays on top of each other and facilitates their manipulation.

On top of the above mentioned, this particular preferred adhesive structure is not used in the card industry at all.
Nor is the operating conditions nor the physical and /or chemical intermediate state of the thermosetting adhesive at least in smart card industry or technical domain.

Among the advantages of the invention, inventors have identified the following ones:
- Inlays manufacturing speed and cost is issue is solved with our construction, since we can utilize a pick and place nature of assembly due to the lack of resin dispensing for adhesion;
- Ease of metal inlay manufacturing in mass production. Tacky adhesive. Placement, Flowing control, yield;
- High bond strength to metal with usual card lamination processes. Avoid to use high temperature or liquid resin;
- Improvement of lamination yield of metal card;
- Card reliability: peel strength high stability after aging.

The features of the card structure is new and detectable namely through FTIR infrared analysis (Fourier Transform Infrared Spectroscopy) to identify chemical family of the adhesive and conversion rate.

However, there may exist similar chemical structured adhesives out in the field.

Some in depth matching of the FTIR analysis may fully identify the source of adhesive used in multilayer cards realized according to any embodiments of the invention.

Therefore, as first object, the invention relates to a multilayer structure manufacturing method comprising the following steps of bonding layers of its structure with thermosetting adhesive film(s), said thermosetting adhesive film(s) having recommended operating conditions of temperature and duration in its technical specification to polymerize during thermal lamination; the method is characterized in said thermosetting adhesive is laminated with said layers in order to present a partial polymerization rate less than polymerization rate resulting from said recommended operating conditions.

According to other features or steps, the multilayer structure manufacturing method comprises the following steps:
- assembly of a first thermosetting adhesive film on a first side of a perforated core sheet setting out perforation areas for component locations,
- fixing at least one or several component(s) to the first adhesive film in respective location(s) through insertion of said component(s) into its location,
- providing a second thermosetting adhesive film identical or similar to the first one on a second side opposite to a first side of said perforated core sheet,
- thermal lamination of said core sheet with first and second thermosetting adhesive films to form a composite inlay, said thermosetting adhesive films having recommended operating conditions of temperature and duration to polymerize during thermal lamination, characterized in that said first thermal lamination operation is configured with temperature and duration conditions enabling first and second thermosetting adhesive films to have a partial polymerization rate comprised between 10 and 18 %.

According to other features or steps of the method:
- Said structure or composite inlay structure is thermal laminated a second time or directly with a cover layer on each external face at conditions suitable to obtain a card structure in which polymerization rate of thermosetting adhesive films after second thermal activation is comprised between 20% - 28%;
- Said thermosetting adhesive film(s) may be preferably activated at a temperature being lower or about 70% of its recommended activation temperature and during a duration being lower or about 30 % of a recommended duration;
- Said thermosetting adhesive film(s) may be are activated at a temperature being lower or about 80% of its recommended activation temperature and during a duration being lower or about 40 % of a recommended duration.

Other operating conditions for the thermal lamination (or thermosetting activation) such as pressure lamination may remain similar to those generally used in smart card industry well known by skilled person.

As a second object, the invention relates also to a multilayer structure comprising layers of its structure bonded with thermosetting adhesive film(s), said thermosetting adhesive film(s) having recommended operating conditions of temperature and duration in its technical specification to polymerize during thermal lamination for bonding materials or layers,
characterized in said thermosetting adhesive present a partial polymerization rate less than polymerization rate resulting from said recommended operating conditions.

According to another features, the multilayer structure may comprise:
- an assembly of a first thermosetting adhesive film on a first side of a perforated core sheet setting out perforation areas for component locations; at least one or several component(s) fixed to the first adhesive film in respective location(s) through insertion of said component(s) into its location; a second thermosetting adhesive film identical or similar to the first one provided on a second side opposite to a first side of said perforated core sheet; said core sheet with first and second thermosetting adhesive films to form a composite thermo-laminated inlay, said thermosetting adhesive films being polymerized; said multilayer structure is characterized in that said first and second thermosetting adhesive films have a partial polymerization rate comprised between 10 and 18 %.

It may comprise alternatively:
- an assembly of a first thermosetting adhesive film on a first side of a perforated core sheet setting out perforation areas for component locations,
- at least one or several component(s) fixed to the first adhesive film in respective location(s) through insertion of said component(s) into its location,
- a second thermosetting adhesive film identical or similar to the first one provided on a second side opposite to a first side of said perforated core sheet,
- said core sheet with first and second thermosetting adhesive films to form a composite thermos-laminated inlay, said thermosetting adhesive films being polymerized,
- a cover layer on each external face of said composite thermos laminated inlay,
characterized in that said first and second thermosetting adhesive films have a partial polymerization rate of comprised between 20% - 28%.

### Figures description.

- Figure 1 illustrates the inlay structure and card structure obtained according to a preferred implementation of the method wit preferred identified thermosetting adhesive (D3450 series of Dexerials company);
- Figure 2 illustrates different steps of the invention method to obtain an inlay structure according to a second way to carry out the method;
- Figure 3 illustrates different steps of the invention method to obtain a card structure from the inlay structure resulting from figure 2 according to the second way to carry out the method;
- Figure 4, illustrates another embodiment aiming to enlarge the invention teaching or concept for applying it to any multilayer structure manufacturing method comprising the step of bonding any layer(s) of its structure with at least one or several thermosetting adhesive film(s) configured to have partial polymerization.

### Description.

Generally speaking, identical or similar to a figure to the other references are an element identical or similar.

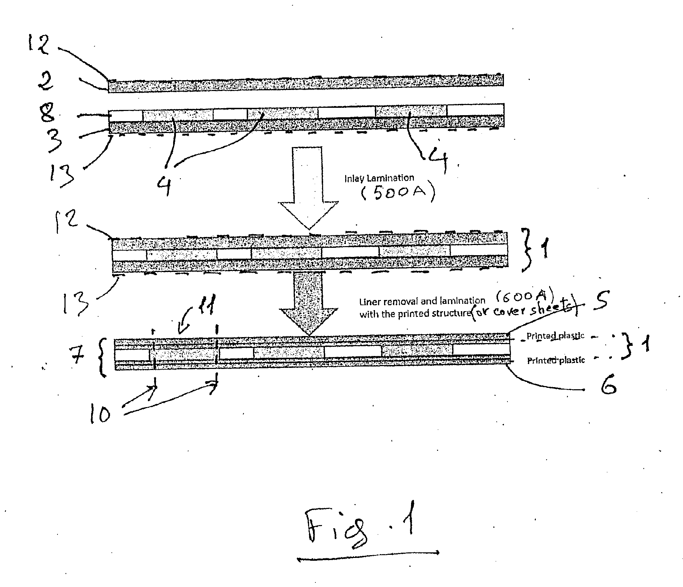

At figure 1, the inlay structure 1 and card structure 7 are obtained according to a preferred implementation of the method to manufacture a multilayer structure with a preferred identified thermosetting adhesive (D3450 series of Dexerials company). It is observed that this adhesive is not used in the card industry domain nor at same operating condition.

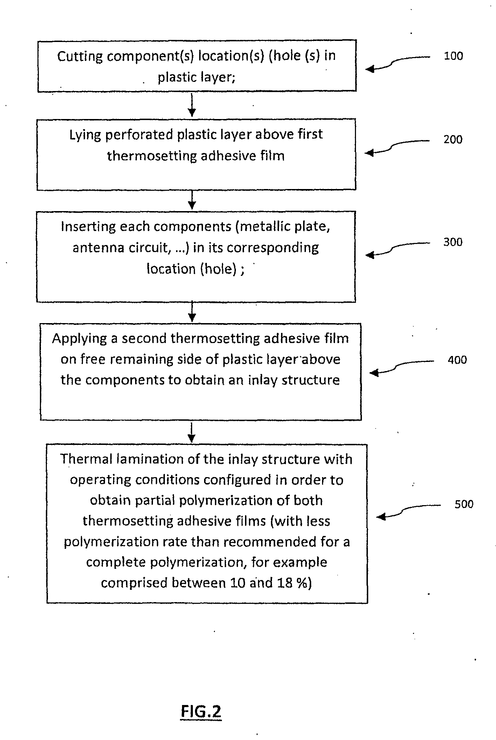

A figure 1, this multilayer structure manufacturing method of the first embodiment comprises the following steps:
- Assembly of a first thermosetting adhesive film 3 on a first side of a perforated core sheet 8 setting out perforation areas for component locations 4; This step may be identical or similar of the step (100) of the method of figure 2;

In the example, a wide plastic layer 8 (core sheet) comprising several card locations (or antenna locations, or else ...) is prepared by cutting / perforating components 4 locations. It may be done namely mechanically by punching method or laser cutting.

After, in the example, the perforated plastic layer 8 is applied above the thermosetting adhesive film 3 (D3450 series film. This step may be identical or similar of the step (200) of the method of figure 2;

Advantageously, this adhesive film has a pressure activated tack at room temperature (or ambient) temperature. This facilitates the positioning of the plastic layer 8 on the adhesive layer.
- Fixing at least one or several component (s) (4) to the first adhesive (3) film in respective location(s) through insertion of said component (s) (4) into its location; this step may be identical or similar of the step (300) of the method of figure 2;

In the example, metal plate 4 and/or antenna circuits which may have a radiofrequency chip connected to an antenna, are picked and placed in their corresponding location into the plastic layer 8; Advantageously, the pressure tack of the adhesive facilitate this step since each component is temporally maintained into its location.

It is observed that the pressure tack of the adhesive is not compulsory. It is possible to have a drop of adhesive in each hole to fix each component. Otherwise, as an alternative, no adhesive at all may inserted above the thermosetting adhesive.
- Providing a second thermosetting adhesive film 2 identical or similar to the first one 3 on a second side opposite to a first side of said perforated core sheet 8; This step may be identical or similar of the step (400) of the method of figure 2;

In the example, same thermosetting adhesive is applied to cover the components 4 on the remaining free side of the core sheet 4, 8.
At this stage, an inlay structure (not yet laminated) is obtained and can be manipulated thanks to the tack of the thermosetting adhesive.
- Thermal lamination of said core sheet 4, 8 with first and second thermosetting adhesive films 2, 3 to form a composite inlay, said thermosetting adhesive films having recommended operating conditions (TDS) of temperature and duration to polymerize during thermal lamination.
Composite means in the present description that the structure comprises layers with different materials or elements of different nature or properties.

This step 500A may be identical or similar of the step (500) of the method of figure 2; but this step 500A may also be viewed differently following the operating conditions below.

According to a preferred operating method, the operating conditions versus TDS specification of the product provider is the following:

### At inlay structure (1) stage:

Thermal lamination operation (500 A) is configured in order to have less than 70% and less than 40% in recommended adhesive activation temperature and duration respectively

This lamination temperature according to this embodiment of the invention may represent 90% of the lamination temperature of a standard PVC card.

### At card stage (7):

Second thermal lamination (600 A) is configured in order to have less than 80% and less than or about 30% in recommended activation temperature and duration respectively

At card stage, it is also possible to use a two steps lamination. In this case, the first step consists to activate overlay on printed core without using the thermoset adhesive. The second step consist to laminate this prelaminated layer with the inlay at a temperature that may represent less than 86% of the lamination temperature of a standard PVC card [TL1]

Thanks to this operating conditions, high adhesion force to metal, up to 18 - 20 N/cm is obtained if lamination of the card at is less or about 80% of the adhesive's recommended temperature.

FTIR Infra-Red analysis. Chemical components comparison at card stage after lamination versus laminated inlay stage.

Polymerization rate observed are provided below through adhesive transformation rate:
At inlay stage: after first thermal lamination, polymerization rate may be 10% - 18% if conditions are (less than or) about 70% and (less or) about 40% in recommended temperature and duration respectively;
   In the example, actual versus TDS conditions is the following: Temperature: 120/180°C represents 66.67% of recommended temperature and duration 20/60 minutes represents 33.3%
At card stage, (after second thermal lamination): the polymerization rate may be 20% - 28% if conditions in lamination are (less or) about 80% and (less or) about 30% in recommended temperature and duration respectively
   In the example, actual versus TDS conditions are the following: Temperature 130/180°C represents 72% of recommended temperature and duration 15/60 minutes represents 25% of recommended duration.
Metal types: can be extended to different types of metals I.E. stainless steel, tungsten alloys, etc...
Plastic types for card layers: could be extended to different types of plastics I.E. PVC, PET, etc...

At figure 2, a second embodiment of the method according to the invention, is also described thereafter and may be followed (at least in part) in relation to the figure 1.

At figure 2, a multilayer structure manufacturing method of the second embodiment comprises the following steps (quite similar than steps described previously):
- At steps 100 to 200: assembly of a first thermosetting adhesive film (3) on a first side of a perforated core sheet (8) setting out perforation areas for component locations (4);
- At step 300, fixing at least one or several component(s) (4) to the first adhesive (3) film in respective location(s) through insertion of said component(s) (4) into its location;
- At step 400, providing a second thermosetting adhesive film (2) identical or similar to the first one on a second side opposite to a first side of said perforated core sheet (8);
- At step 500, (lightly differing from 550A of figure 1) the method carry out a first thermal lamination of said core sheet(4, 8) with first and second thermosetting adhesive films (2, 3) to form a composite inlay, (said thermosetting adhesive films have recommended or normal operating conditions of temperature and duration to polymerize during thermal lamination).
According to a characterizing features or step, this first thermal lamination operation is configured with temperature and duration conditions enabling first and second thermosetting adhesive films (2, 3) to have a partial polymerization rate comprised between 10 and 18 %.

The operating conditions may be configured differently than the preferred ones defined above in relation to the figure 1.
For example, it may be possible to apply a higher temperature than preferred one with a shorter duration than the preferred one or applying a lower temperature with a longer duration than preferred ones. The skilled person may vary the thermal lamination operating conditions (temperature and duration) in order to have a partial polymerization rate comprised between 10 and 18 %.

The above preferred temperature and duration are rather an optimization of the thermal lamination process operating conditions for industrial operations.

The thermosetting adhesive films (2, 3) may preferably be provided with an external removable protective paper or film (12, 13).

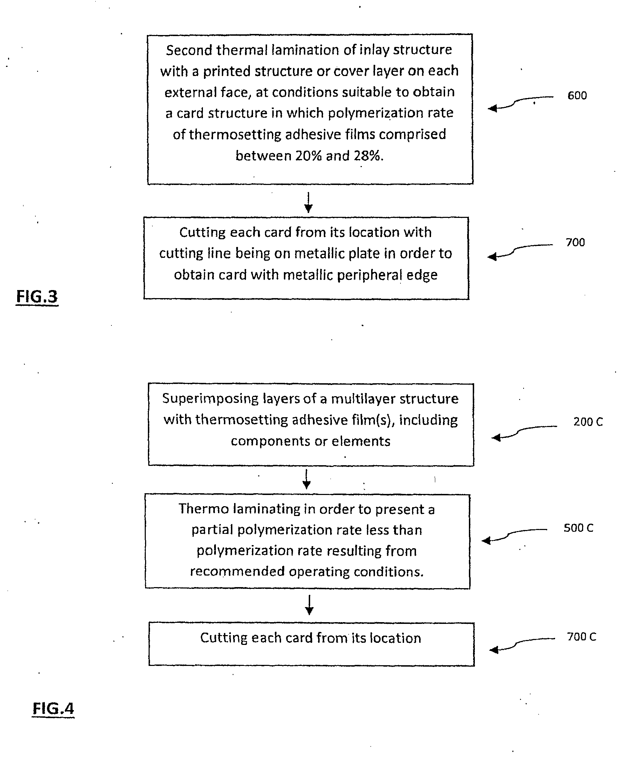

At figure 3 it is illustrated different steps (600, 700) of the invention method to obtain a card structure from the inlay structure (similar to 1) resulting from figure 2 according to the second way to carry out the method.
- At step 500, according to another characterized feature or step of the alternative embodiment, the composite inlay (4, 8) is thermal laminated a second time with a cover layer (5, 6) lying on each external face. The operating conditions of the thermal lamination are suitable to obtain a card structure (7) in which polymerization rate of thermosetting adhesive films after second thermal activation is comprised between 20% - 28%.
   Skilled person may vary the temperature and the duration to achieve these preferred or optimized polymerization rate.
- At step 700, the obtained laminated structure is cut (severing lines 10) namely by punching tool in order to extract several cards 11

According to another characterized feature or step of the alternative embodiment said first and second thermosetting adhesive films 2, 3 may be activated at a temperature being lower or about 70% of its recommended activation temperature and during a duration being lower or about 30 % of a recommended duration.

Concerning the lamination of the card structure, according to another characterized feature or step of the alternative embodiment, said first and second thermosetting adhesive films (2, 3) are activated at a temperature being lower or about 80% of its recommended activation temperature and during a duration being lower or about 40 % of a recommended duration.

In the example the inventors may use adhesive films selected among thermosetting film or tape identical or similar to D3450 series of Dexerials Company. This adhesive film may be provided with removal protection 12 or 13.

For these adhesive films, the first thermal lamination may be conducted between 110°C and 135 °C instead of 160 to 180 °C.

In contrast, the second thermal lamination of the card structure may be conducted between 135°C and 150 °C instead of 160 to 180 °C.

Preferably, the thermosetting adhesive film may configured in order to have a pressure activated tack at room temperature. This is the case of the D3450 series films.

This give the advantage of fixing temporarily the adhesive film on the core perforated sheet 8 and also the different components 4 (metal plates, antenna, alloy plates... in their respective location. A pick and place method can therefore be used.

According to another characterizing feature or step, the first and second adhesive films may be selected among thermosetting acryl-epoxy adhesive films or tape (like D3450 series films).

The first adhesive film may be activated at said temperature during a duration less than 25 minutes.
It may be the same duration for the second thermal lamination.
The duration may be 24 minutes (40 % of recommended duration) for the inlay structure.

It may be 18 minutes (30 % of recommended duration) for the second lamination.

According another characterizing feature or step, additional protective layer or covering sheet or film (5, 6), overlays, printed or not, may be thermal laminated on both opposite sides of the inlay structure (1) after removing external removable protective paper or film 12, 13.

As yet observed, the component (4) may comprises metallic plate (4) or rigid material or metallic alloy or antenna.

According another characterizing feature or step, individual' cards with metallic edge may be obtained by cutting 10 each metal plate extending around a corresponding card surface 11 in said card structure 7.

Eventually, the identified thermosetting adhesive may be used in other structure using different plastic or polymeric layers such as PET or PC (polycarbonate) structure.

Cards containing large non-polymeric secure elements or aesthetical components, would benefit greatly from this structure as well due to the good bond strength and low processing temperature.

It is observed that the method is described to produce several cards in an inlay structure of wide surface (having a plurality of card locations), but the method may be used to produce a single card also.

Although, the method is described through a first and a second thermal laminations, it is possible to prepare a structure having all the layers (6, 3, 4, 8, 2, 5) superimposed together and doing a single lamination with operating conditions configured to obtain directly a polymerization rate comprised between 20% and 28%.

Preferred thermosetting adhesive tapes (or films) D3450 series presents below an extract of technical data sheet (TDS) of thermosetting tapes for FPC (flexible printed circuit).

| Product name | D3450 | D3451 |
|---|---|---|
| Main component | acryl/epoxy | acryl/epoxy |
| Carrier | Non-carrier | Non-carrier |
| Color | White | White |
| Adhesive thickness(µm) | About 35 | About 25 |
| Release film thickness(µm) | About 38 | About 38 |
| Release paper thickness(µm) | About 130 | About 130 |
| Bonding strength (N/10mm) 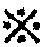 | 31 | 25 |
| Standard size (width & length)) | 250mm × 100m | 250mm × 100m |
| | 500mm × 100m | 500mm × 100m |

| | | |
|---|---|---|
| 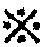 90° peeling strength (CCL/ADH/polyimide stiffener) | | |

**<Standard bonding condition>**

| ▪ Vacuum quick press and postcure process | ▪Long press process |
|---|---|
| Press temperature : 160 to 180°C | Press temperature : 160 °C |
| Vacuum time : 10 to 30 sec | Pressing time : 60 min. |
| Pressing time : 1 to 2 min. | Pressure : 3 MPa |
| Pressure : 1 to 2 MPa | |
| Postcure condition : 140°C 60min. | |

As indicated in the adhesive TDS as suitable use : this adhesive is ideal for bonding FPC stiffener (Polyimide, glass epoxy, aluminium, and stainless steel) that undergo heat treatement such as solder reflow.

It is observed that according to the adhesive TDS, its recommended temperature required is from 160-180°C, of at least an hour.

In contrast to the TDS, preferred card manufacturing temperature range according to the invention may be from 130-145°C for 35-45 minutes.

By FTIR analysis, it is possible namely to identify the absorbance signal of the epoxy cycle around 900 cm-1. Thermal activation of the adhesive leads to the opening of the epoxy cycle. Thus its FTIR absorbance signal decreases.
Taking as a reference a non-reactive chemical function, such as -CH3 methyl group, which absorbs around 2900 cm-1, it is possible to calculate the ratio between the absorbance signal of the epoxy cycle and the absorbance signal of the methyl group. From this ratio, which decreases as thermal curing progresses, it is possible to deduce the reaction rate of the adhesive.

At figure 4, the invention general teaching or concept is illustrated and may apply to any multilayer structure manufacturing method comprising the steps of bonding any layer(s) (4, 8, 5, 6) of its structure (1, 7) with at least one or several thermosetting adhesive film(s) (2, 3).
This structure may preferably, without being compulsory, include or embed components or elements or various nature and functionalities (metal plate, antenna circuit, rigid or non-flexible materials...).

As yet described in all the embodiments, said thermosetting adhesive film has recommended operating conditions of temperature and duration in its technical specification (TDS) to polymerize during thermal lamination (500, 600).

At step 200 C, the method comprises the step of superimposing layers of a multilayer structure with thermosetting adhesive film(s), (including or not components or elements);
At step 500 C, according to a characterizing step of this general concept of bonding layers, at least one thermosetting adhesive is laminated with said layers in order to present a partial polymerization rate less than polymerization rate resulting from said recommended operating conditions.

All steps and features described in previous embodiments may apply to the embodiments of figure 4.
Namely thermal lamination operation may be configured with temperature and duration conditions enabling each or single thermosetting adhesive film to have a partial polymerization rate comprised between 10 and 18 %.

Likewise, the multilayer structure may be thermal laminated a second time with a cover layer on each external face at conditions suitable to obtain a card structure (7) in which polymerization rate of thermosetting adhesive films after second thermal activation is comprised between 20% - 28%. Such final polymerization rate after lamination(s) may be achieve after one or several hot laminations. It may be obtained on a multilayer structure having directly its cover sheets or protective layers or printed layers.

Likewise, thermosetting adhesive film(s) 2 and/or 3 may be activated at a temperature being lower or about 70% of its recommended activation temperature and during a duration being lower or about 30 % of a recommended duration.

Likewise, thermosetting adhesive films 2 and/or 3 may be activated at a temperature being lower or about 80% of its recommended activation temperature and during a duration being lower or about 40 % of a recommended duration.

Although the different percentages given in all embodiments are the preferred ones for an optimization of the manufacturing method for industrial purpose, invention may be used with different percentage below other than selected reaction rate of the adhesive representing partial polymerization.

For example, depending the multiplayer usage, for example for card of passport, and the material to bond, the polymerization rate may be higher than 18 or 28 % but much lower than recommended one in TDS technical specifications. Partial polymerization may be for example represent 1/5 or 1/3 or 1/2 .... (i.e less than 20 % or 33 % or 50 % or 70%...), of a complete or recommended polymerization of the adhesive.

Although epoxy-acrylate based thermos-adhesive from Dexerial is preferred, other alternatives may be used as thermosetting adhesive such as thermoset polyurethane(s) (generally 2 components), epoxy based adhesives in general.

## Claims

1. Multilayer structure manufacturing method comprising the following steps of bonding layers (4, 8, 5, 6) of its structure (1, 7) with thermosetting adhesive film(s) (2, 3), said thermosetting adhesive film(s) having recommended operating conditions of temperature and duration in its technical specification (TDS) to polymerize during thermal lamination (500, 600),
**characterized in** said thermosetting adhesive is laminated with said layers in order to present a partial polymerization rate less than polymerization rate resulting from said recommended operating conditions.

2. Multilayer structure manufacturing method according to previous claim, comprising the following steps:
- assembly of a first thermosetting adhesive film (3) on a first side of a perforated core sheet (8) setting out perforation areas for component locations (4),
- fixing at least one or several component (s) (4) to the first adhesive (3) film in respective location(s) through insertion of said component(s) (4) into its location,
- providing a second thermosetting adhesive film (2) identical or similar to the first one on a second side opposite to a first side of said perforated core sheet (8),
- thermal lamination of said core sheet (4, 8) with first and second thermosetting adhesive films (2, 3) to form a composite inlay, said thermosetting adhesive films having recommended operating conditions of temperature and duration to polymerize during thermal lamination, **characterized in that** said first thermal lamination operation is configured with temperature and duration conditions enabling first and second thermosetting adhesive films (2, 3) to have a partial polymerization rate comprised between 10 and 18 %.

3. Method according to the preceding claims, **characterized in that** said structure or composite inlay (4, 8) structure is thermal laminated a second time or directly with a cover layer (5, 6) on each external face at conditions suitable to obtain a card structure (7) in which polymerization rate of thermosetting adhesive films after second thermal activation is comprised between 20% - 28%.

4. Method according to any one of previous claim, **characterized in that** that said thermosetting adhesive film(s) (2, 3) are activated at a temperature being lower or about 70% of its recommended activation temperature and during a duration being lower or about 30 % of a recommended duration.

5. Method according to claim 3, **characterized in that** that said thermosetting adhesive film(s) (2, 3) are activated at a temperature being lower or about 80% of their recommended activation temperature and during a duration being lower or about 40 % of a recommended duration.

6. Method according to claim 4, **characterized in that** said first thermal lamination is conducted between 110°C and 135 °C instead of 160 to 180 °C.

7. Method according to claim 5, **characterized in that** said second thermal lamination of the card structure is conducted between 135°C and 150 °C instead of 160 to 180 °C.

8. Method according to anyone of previous claims, **characterized in that** said thermosetting adhesive film is configured in order to have a pressure activated tack at room temperature.

9. Method according to anyone of the preceding claims, **characterized in that** said first and second adhesive films are selected among thermosetting acryl-epoxy adhesive films or tapes.

10. Method according to anyone of the preceding claims, **characterized in that** said first adhesive film is activated at said temperature during a duration less than 24 minutes.

11. Method according to anyone of the preceding claims, **characterized in that** that said first and second thermosetting adhesive films (2, 3) are provided with an external removable protective paper or film (12, 13).

12. Method according to anyone of the claims 2 to 11, **characterized in that** additional protective layer or covering sheet or film (5, 6) are thermal laminated on both opposite sides of the inlay structure (1) after removing external removable protective paper or film (12, 13) .

13. Method according to anyone of claims 2 to 12, **characterized in that** said component (4) comprises metallic plate (4) or rigid material or metallic alloy or antenna.

14. Method according to anyone of the preceding claims, **characterized in that** individual cards with metal edge are obtained by cutting (10) each metal plate extending around a corresponding card surface (11) in said card structure (7).

15. Multilayer structure comprising the layers (4, 8, 5, 6) of its structure (1, 7) bonded with thermosetting adhesive film(s) (2, 3), said thermosetting adhesive film(s) having recommended operating conditions of temperature and duration in its technical specification (TDS) to polymerize during thermal lamination (500, 600) for bonding materials or layers,
**characterized in** said thermosetting adhesive present a partial polymerization rate less than polymerization rate resulting from said recommended operating conditions.

16. Multilayer structure according to claim 15 comprising :
- an assembly of a first thermosetting adhesive film (3) on a first side of a perforated core sheet (8) setting out perforation areas for component locations (4),
- at least one or several component (s) (4) fixed to the first adhesive (3) film in respective location(s) through insertion of said component(s) (4) into its location,
- a second thermosetting adhesive film (2) identical or similar to the first one provided on a second side opposite to a first side of said perforated core sheet (8),
- said core sheet(4, 8) with first and second thermosetting adhesive films (2, 3) to form a composite thermo-laminated inlay, said thermosetting adhesive films being polymerized,
**characterized in that** said first and second thermosetting adhesive films (2, 3) have a partial polymerization rate comprised between 10 and 18 %.

17. Multilayer card structure (7) according to claim 15 comprising
- an assembly of a first thermosetting adhesive film (3) on a first side of a perforated core sheet (8) setting out perforation areas for component locations (4),
- at least one or several component (s) (4) fixed to the first adhesive (3) film in respective location(s) through insertion of said component(s) (4) into its location,
- a second thermosetting adhesive film (2) identical or similar to the first one provided on a second side opposite to a first side of said perforated core sheet (8),
- said core sheet(4, 8) with first and second thermosetting adhesive films (2, 3) to form a composite thermo laminated inlay, said thermosetting adhesive films being polymerized,
- a cover layer (5, 6) on each external face of said composite thermo-laminated inlay,
**characterized in that** said first and second thermosetting adhesive films (2, 3) have a partial polymerization rate comprised between 20% - 28%.
